(19) Europäisches Patentamt
European Patent Office
Office européen des brevets

(11) **EP 2 786 462 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **12805940.9**

(22) Anmeldetag: **29.11.2012**

(51) Int Cl.:
*H02M 7/00* (2006.01)    *H02M 7/5387* (2007.01)
*H02M 7/5395* (2006.01)    *H02P 21/06* (2006.01)

(86) Internationale Anmeldenummer:
**PCT/EP2012/004921**

(87) Internationale Veröffentlichungsnummer:
**WO 2013/079198 (06.06.2013 Gazette 2013/23)**

(54) **VERFAHREN ZUR STEUERUNG EINES MEHRPHASIGEN UMRICHTERS**

METHOD FOR CONTROLLING A MULTIPHASE CONVERTER

PROCÉDÉ DE COMMANDE D'UN CONVERTISSEUR MULTIPHASE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2011 DE 102011120297**

(43) Veröffentlichungstag der Anmeldung:
**08.10.2014 Patentblatt 2014/41**

(73) Patentinhaber: **Diehl AKO Stiftung & Co. KG 88239 Wangen (DE)**

(72) Erfinder: **OLARESCU, Nicola-Valeriu 88239 Wangen (DE)**

(74) Vertreter: **Diehl Patentabteilung c/o Diehl Stiftung & Co. KG Stephanstrasse 49 90478 Nürnberg (DE)**

(56) Entgegenhaltungen:
**US-A1- 2011 040 519**

EP 2 786 462 B1

**Beschreibung**

Die Erfindung betrifft ein Verfahren zur Steuerung eines mehrphasigen Umrichters, der eine Anzahl von in einen Spannungszwischenkreis geschaltete Halbbrücken mit Mittenabgriffen zwischen Schaltelementen umfasst, wobei durch ein getaktetes Schalten der Schaltelemente die jeweiligen Mittenabgriffe der Halbbrücken nach dem Prinzip der Pulsweitenmodulation mit einer oberen Zwischenkreisschiene oder mit einer unteren Zwischenkreisschiene des Spannungszwischenkreises verbunden werden. Eine derartige Steuerung dient insbesondere zur Versorgung eines mehrphasigen Wechselfeldsystems. Das Wechselfeldsystem kann dabei eine motorisch oder generatorisch betriebene Wechselstrommaschine ebenso darstellen wie ein Wechselstromnetz. Insbesondere bezieht sich die Erfindung auch auf die Versorgung eines dreiphasigen Drehstrommotors.

Ein mehrphasiger Umrichter zur Erzeugung von Ausgangsspannungen für ein Wechselfeldsystem aus einem Spannungszwischenkreis ist aus dem Stand der Technik hinlänglich bekannt, beispielsweise aus der US 2011/0040519 A1. Aus Figur 1 kann ein solcher Umrichter für ein dreiphasiges Drehfeldsystem entnommen werden. Der dargestellte Umrichter umfasst drei Halbbrücken mit jeweils zwei Paaren aus je einem Schaltelement und einer parallel geschalteten Diode. Jeweils zwischen den Paaren einer Halbbrücke sind an den Mittenabgriffen die einzelnen Phasen für das Drehfeldsystem kontaktiert. Die für das Drehfeldsystem benötigten Spannungen sind durch die Potentialdifferenzen der einzelnen Phasen zueinander gegeben. Durch wechselweises Schalten der beiden Schaltelemente einer Halbbrücke wird der Mittenabgriff der jeweiligen Phase abwechselnd auf das obere oder auf das untere Zwischenkreispotential geklemmt bzw. mit der oberen oder der unteren Zwischenkreisschiene verbunden.

Auch die Ansteuerung der insgesamt sechs Schaltelemente, von denen jeweils zwei auf eine der drei Halbbrücken des Umrichters verteilt sind, mittels Pulsweitenmodulation ist bekannt, wozu beispielhaft auf Handley, P.G.; Boys, J.T; "Practical real-time PWM modulators: ah assessment", IEE Proceedings B, Electric Power Applications, Volume 139, pp. 96 ff., Issue 2, March 1992 hingewiesen wird. Als Schaltelemente weisen moderne Umrichter fast ausschließlich schaltbare Leistungshalbleiter auf. Als derartige Leistungshalbleiter werden neben Feldeffekttranstoren, MOS-FET ("Metal Oxide Semiconductor" - FeldeffektTransistoren) und Bipolar-Transistoren, insbesondere sogenannte IGBT's (Insulated Gate Bipolar Transistors) eingesetzt. Letztere vereinbaren dabei die Vorzüge von Feldeffekt- und Bipolartransistoren.

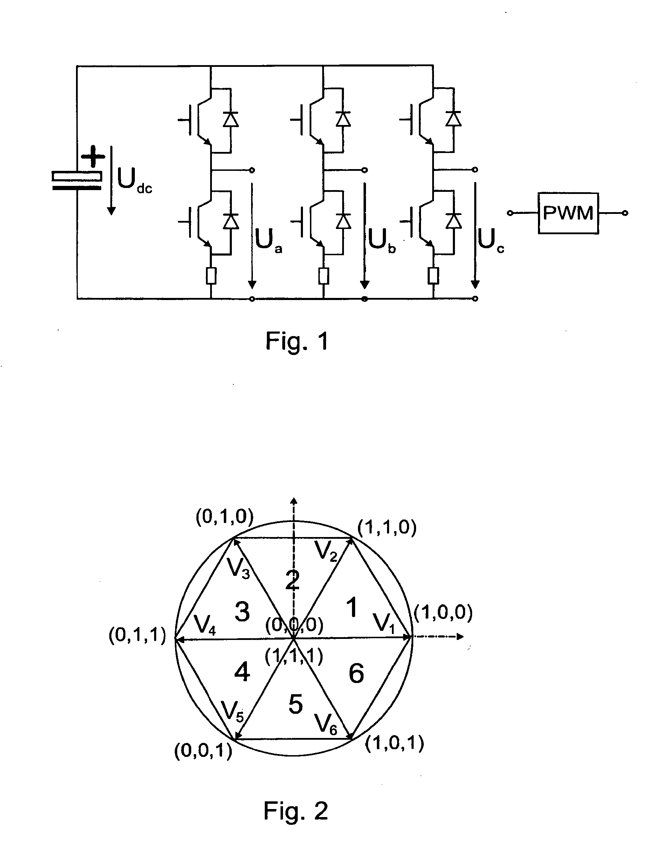

Bei der Pulsweitenmodulation (PWM) wird für die Phase einer Halbbrücke das mittlere Potential oder die mittlere Spannung gegenüber einem Bezugspotential, z. B. $U_a$ entsprechend Figur 1, durch Wechsel der Schaltzustände der entsprechenden Schaltelemente innerhalb einer vorgegebenen Periodendauer eingestellt. Mit anderen Worten wird bei der Pulsweitenmodulation bei konstanter Frequenz der Tastgrad moduliert. Der Wert der Ausgangsspannung einer Periodendauer resultiert hierbei durch eine Mittelung der jeweils eingestellten Schaltzustände bzw. aus dem Verhältnis der Schaltzeiten der Klemmung an das obere und der Klemmung an das untere Zwischenkreispotential.

Zulässige Schaltzustände des Umrichters sind für jeweils eine Halbbrücke "TopOn", d. h. oberes Schaltelement an und unteres Schaltelement aus, "Bot (-tom) on", d.h. unteres Schaltelement an und oberes Schaltelement aus sowie "Totzeit", falls beide der Schaltelemente ausgeschaltet sind. Der letzte Schaltzustand einer "Totzeit" wird gewöhnlich nur für vernachlässigbare kleine Zeitdauern (ca. 1 % Dauer) zwischen den Zuständen "TopOn" oder "BotOn" eingestellt. Es wird also bei vernachlässigbarer Totzeit innerhalb einer Periodendauer $T_p$ (z.B. 100 μs) abwechselnd "TopOn" für die Zeit $T_{top}$ und anschließend "BotOn" für die Zeit $T_{bot} = T_p - T_{top}$ eingestellt. Werden die Spannungen der jeweiligen Halbbrücken $U_a$, $U_b$ und $U_c$ entsprechend Figur 1 gegen den unteren Zweig des Spannungszwischenkreises, zwischen dessen Zweigen die Spannung $U_{dc}$ anliegt, so ergibt sich ein Einschaltverhältnis der jeweiligen Halbbrücke von $\tau = T_{top}/T_p$. Die mittlere Spannung ergibt sich dann beispielhaft für die Halbbrücke a zu

$$U_a = \tau_a \cdot U_{dc}.$$

Im stationären Betrieb des Drehfeldsystems sind die zu generierenden Soll-Potentialdifferenzen bzw. die Sollspannungen zwischen den drei Phasen in der Regel dreiphasig sinusförmig. Bei dreiphasigem Wechselstrom beträgt die Phasendifferenz zwischen den einzelnen Phasen jeweils 120°. Die Einschaltverhältnisse der drei Halbbrücken des Umrichters werden dann durch eine Regel der folgenden Art generiert:

$$\tau_a = \hat{\tau} \cdot \cos(\omega t) + \tau_0$$

$$\tau_b = \hat{\tau} \cdot \cos\left(\omega t - \frac{2\pi}{3}\right) + \tau_0$$

$$\tau_c = \hat{\tau} \cdot \cos\left(\omega t - \frac{4\pi}{3}\right) + \tau_0 \, ,$$

wobei $\hat{\tau} = \hat{u}_{ref}/U_{dc}$ die Amplitude der Aussteuerung, $\hat{u}_{ref}$ die Amplitude der Soll-Grundwelle der Leiterspannungen, $U_{de}$ die Spannung des DC-Zwischenkreises und $\tau_0$ den gemeinsamen Off-Set der Einschaltverhältnisse bezeichnet.

Zur Erzeugung der gewünschten Spannungen zwischen den einzelnen Phasen des Umrichters $U_{ab}$ = $U_a$-$U_b$, $U_{bc}$= $U_b$ - $D_c$, $U_{ca}$ = $U_c$ - $U_a$ mittels Pulsweitenmodulation gibt es erkennbar verschiedene Varianten. Da in einem Drehfeldsystem nur die Spannungen oder Differenzsignale zwischen den Phasen $U_{ab}$, $U_{br}$, $U_{ca}$ sinusförmig gefordert werden, kann den Einzelpotentialen $U_a$, $U_b$, $U_c$ ein gemeinsamer Offset $U_0$, auch Nullsystem genannt, überlagert werden. Das Nullsystem $U_0$ wird so gewählt, dass die mittleren Einzelpotentiale an den Umrichterzweigen im Bereich zwischen Null und $U_{dc}$ liegen, respektive $\tau_0$ so gewählt, dass die Einschaltverhältnisse $\tau_a$, $\tau_b$ und $\tau_c$ zwischen Null und Eins liegen. Ein Einschaltverhältnis von $\tau_a$ = 0 bedeutet dabei, dass der entsprechende Umrichterzweig a nicht geschaltet bzw. getaktet wird, sondern vielmehr während der gesamten Periodendauer dauerhaft auf das untere Zwischenkreispotential geklemmt wird. Ein Einschaltverhältnis von $\tau_a$ = 1 bedeutet, dass der entsprechende Umrichterzweig nicht geschaltet bzw. getaktet wird, sondern vielmehr während der gesamten Periodendauer dauerhaft auf das obere Zwischenkreispotential geklemmt wird.

Mithin lässt sich zeigen, dass es insbesondere für ein dreiphasiges Sinussystem in dem Differenzsignal zwischen den Phasen möglich ist, die Einzelpotentiale der Phasen mittels Pulsweitenmodulation derart zu generieren, dass jeweils nur zwei Halbbrücken getaktet werden, während die jeweils dritte Halbbrücke dauerhaft auf das obere oder auf das untere Zwischenkreispotential geklemmt ist bzw. die Einschaltdauer dieser Halbbrücke entweder Eins oder Null ist. Gegenüber dem Modulationsverfahren, in dem zur Erzeugung der Einzelpotentiale alle drei Halbbrücken getaktet betrieben werden, weist das Modulationsverfahren der Zwei-Phasen-Taktung geringere Schaltverluste auf. Die Schalthäufigkeit ist verringert.

Ein Modulationsverfahren der Zwei-Phasen-Taktung ist beispielsweise aus der EP 0 363 514 A1 bekannt. Dabei werden jeweils hinsichtlich der Periode des gewünschten sinusförmigen Ausgangssignals für jeweils 60° nur zwei Phasen bzw. zwei der Halbbrücken getaktet, während die jeweils dritte Phase bzw. Halbbrücke dauerhaft auf das obere oder das untere Zwischenkreispotential geklemmt wird. Hierdurch verringern sich gegenüber dem Modulationsverfahren einer Drei-Phasen-Taktung die Schaltverluste in den Schaltelementen. Die Schalthäufigkeit ist um ein Drittel reduziert. Nachteiligerweise erhöhen sich jedoch die Leitungsverluste in dem dauerhaft geklemmten Schaltelement.

In einer anderen Methode der Pulsweitenmodulation für einen dreiphasigen Umrichter, der sogenannten Raumzeigermodulation, werden den einzelnen möglichen Umrichterschaltzuständen Zeiger oder Vektoren zugeordnet, die in einem Zahlentripel den jeweils gegebenen Schaltzustand konkret angeben. Den vorbeschriebenen Schaltzuständen "TopOn" und "BotOn" einer jeweiligen Halbbrücke werden dabei die Zahlenwerte "1" bzw. "0" zugeordnet. Die Halbbrücken a, b, c entsprechen in dem Zahlentripel der ersten, zweiten bzw. dritten Positon. So beschreibt beispielsweise das Zahlentripel (1,1,0) den Schaltzustand des Umrichters, wobei die erste Halbbrücke a und die zweite Halbbrücke b den Schaltzustand "TopOn" und die dritte Halbbrücke c den Schaltzustand "BotOn" aufweisen. Die Zahlentripel (0,0,0) und (1,1,1) werden auch als Null-Vektoren oder Null-Zeiger bezeichnet, da in diesen Schaltzuständen alle Phasen des Umrichters entweder auf das obere oder auf das untere Zwischenkreispotential geklemmt sind. Die Spannungen oder Potentialdifferenzen zwischen den einzelnen Phasen sind somit Null, so dass diese Vektoren keine Relevanz für das Drehfeldsystem haben. Bei den Null-Vektoren handelt es sich insofern um inaktive Zustände des Umrichters. Für einen dreiphasigen Umrichter verbleiben somit insgesamt sechs aktive mögliche Schaltkonfigurationen.

Zur Methode der Raumzeigermodulation werden die den aktiven Schaltzuständen zugeordneten Zeiger oder Vektoren entsprechend Figur 2 aufgetragen, wobei sich benachbarte Zeiger jeweils nur in einem Schaltzustand einer Halbbrücke unterscheiden. Die jeweils zwischen zwei benachbarten Vektoren aufgespannten Sektoren werden entsprechend durchnummeriert. Mathematisch handelt es sich bei der Methode der Raumzeigermodulation entsprechend Figur 2 um eine Transformation der dreidimensionalen Beschreibung der Ausgangsgrößen eines dreiphasigen Umrichters in den zweidimensionalen Raum. Die Ausgangsspannungen des Umrichters rotieren dabei als zweidimensionale Vektoren innerhalb des durch die sechs Basisvektoren der Zustände des Umrichters aufgespannten Hexagons entsprechend Figur 2.

Spannungsvektoren zwischen jeweils zwei Basisvektoren oder aktiven Zuständen des Umrichters werden durch die Einschaltdauern der aktiven Zustände generiert. Zur Generierung von Spannungsvektoren, die nicht bis zum Rand des Hexagons reichen, werden innerhalb der Periodendauer Schaltzustände der Null-Vektoren hinzugefügt. Die Einschaltzeiten aller gewählten Schaltzustände addieren sich zur Periodendauer der Pulsweitenmodulation. Werden keine Null-Vektoren hinzugeschaltet, können nur Ausgangsspannungen generiert werden, deren zugehörige Vektoren im Diagramm entsprechend Figur 2 auf dem Rand des Hexagons enden.

Die Generierung eines Spannungsvektors unter intelligenter Zuschaltung der Nullvektoren entspricht dem vorbeschriebenen Modulationsverfahren einer Zwei-Phasen-Taktung. In jedem Sektor werden die Spannungswerte durch benachbarte Basisvektoren oder Schaltzustände des Umrichters eingestellt, die sich jeweils nur im Schaltzustand einer Halbbrücke unterscheiden. Beispielsweise unterscheiden sich die den Sektor 1 aufspannenden Basisvektoren (1, 1, 0) und (1, 0, 0) nur im Schaltzustand der zweiten Halbbrücke. Wird innerhalb eines Sektors konsequent auf jeweils einen Null-Vektor, d.h. vorliegend entweder auf den Null-Vektor (1,1,1) oder auf den Null-Vektor (0,0,0) umgeschaltet, so bleibt zusätzlich entweder die erste oder die dritte Halbbrücke dauerhaft auf das obere oder auf das untere Zwischenkreispotential geklemmt.

Aus Figur 2 wird zugleich ersichtlich, dass Spannungsvektoren, die außerhalb des einbeschriebenen Hexagons enden, nicht erzeugt werden können. Der durch die Basisvektoren vorgegebene maximale Spannungsbetrag kann innerhalb der Sektoren nicht erreicht werden. Werden während der Ansteuerung des Umrichters Spannungswerte an den Ausgangsklemmen benötigt, die außerhalb des Hexagons liegen, so sind diese auf das sogenannte Hexagon-Limit begrenzt, d.h. die entsprechenden Vektoren enden auf dem Rand des Hexagons. Man spricht dann von einer sogenannten Übermodulation. Der eigentliche notwendige Spannungs- oder Potentialverlauf einer Phase kann nicht mehr generiert werden. Die Spannung zwischen zwei Phasen des Umrichters weist dann einen deformierten Sinus-Verlauf auf, was mit unerwünschten Oberschwingungen im Signal verbunden ist.

Bei der Steuerung oder Regelung eines Umrichters für ein Drehfeldsystem mittels Raumzeigermodulation werden generell die das System beschreibenden Größen und insbesondere die Ausgangsgrößen des Umrichters in ein zweidimensionales Koordinatensystem transformiert. Bei der sogenannten feldorientieren Regelung rotiert das zweidimensionale Koordinatensystem zur Beschreibung der Raumzeigergrößen mit dem magnetischen Fluss des Drehfeldsystems. Die Koordinaten der Raumzeigergrößen bei der feldorientieren Regelung werden mit d und q bezeichnet. Eine andere Möglichkeit ist die Transformation in ein zweidimensionales statorfestes Koordinatensystem. Die Koordinaten der Raumzeigergrößen in diesem System werden mit $\alpha$ und $\beta$ bezeichnet. Zur Regelung eines Drehfeldsystems mittels Raumzeigermodulation werden real gemessene Zustandsgrößen wie Klemmenspannungen oder Motorströme gemessen, mathematisch in die jeweiligen Raumzeigergrößen transformiert und der Umrichter entsprechend der transformierten Raumzeigergrößen auf die gewünschten Schaltzustände zur Erzeugung der Spannungen zwischen den Phasen angesteuert. Insbesondere ist dabei auf die zweidimensionale Darstellung zur Generierung der Ausgangsspannungen entsprechend Figur 2 Bezug genommen.

Bei einer stromgeführten Regelung des Drehfeldsystems werden die Ausgangsspannungen des Umrichters in Abhängigkeit von einer Abweichung des Stroms von einem Sollstrom, beispielsweise durch Vorgabe eines Sollwertes für die feldbildende Stromkomponente $i_d$ und eines Sollwertes für die momentbildende Stromkomponente $i_q$, angesteuert. Die Regelung eines Drehfeldsystems innerhalb des d, q Koordinatensystems hat dabei den Vorteil, dass die zu einer Blindleistung führende Stromkomponente $i_d$, weil feldbildend, und die momentbildende Komponente $i_q$ unmittelbar ersichtlich werden.

Die Ansteuerung eines Umrichters mittels Pulsweitenmodulation anhand von Raumzeigergrößen ist beispielsweise in der US 6,819,078 B2 beschrieben. Dazu wird ein Rechenalgorithmus angegeben, mit dem bei vektorgeregelten Umrichtern aus einem Soll-Spannungsvektor die Einschaltverhältnisse $\tau_a$, $\tau_b$, $\tau_c$ mit einfachen Rechenoperationen berechnet werden kann. Mit dem angegebenen Algorithmus sind Modulationsverfahren sowohl mit einer Drei-Phasen-Taktung als auch mit einer Zwei-Phasen-Taktung möglich. Dabei wird eine Übermodulation dadurch erkannt, dass innerhalb des Algorithmus eine negative Einschaltdauer für einen Null-Vektor auftritt, was der Anforderung eines Spannungswertes außerhalb des hexagonalen Limits entspricht. Im Falle einer Übermodulation wird die dem Spannungswert zugeordnete Raumzeigergröße reskaliert, so dass die Spannungswerte wieder innerhalb des hexagonalen Limits liegen. Eine Übermodulation mit den bekannten Nachteilen wird somit verhindert.

Weiter ist aus der EP 0 840 441 B1 eine feldorientierte Regelung einer Drehfeldmaschine bekannt, wobei die Ausgangsspannungen an der Spannungsdecke geführt sind. Zum Vorsehen einer Spannungsbegrenzung wird bei einer Regelung im d, q- Koordinatensystem der Betrag der momentbildenden Stromkomponente $i_q$ verringert, wenn die Spannungskomponente $U_d$ in Flussrichtung einen Grenzwert erreicht, und es wird die feldbildende Stromkomponente $i_d$ verkleinert, wenn die Spannungskomponente $U_q$ senkrecht zur Flussrichtung einen weiteren Grenzwert erreicht. Entsprechend der begrenzten Spannungskomponenten $U_d$, $U_q$ werden die entsprechenden Phasenspannungen des Umrichters gesteuert. Insbesondere wird für die Grenzwerte die maximal verfügbare Ausgangsspannung des Umrichters gewählt, so dass die für den Umrichter vorgegebenen Einschaltverhältnisse der Halbbrücken kleiner "1" sind bzw. der Umrichter innerhalb des hexagonalen Limits angesteuert wird. Damit wird eine für Last notwendige Spannungsreserve geschaffen, wozu die feldbildende und/oder die momentbildende Stromkomponente verringert ist. Da der Umrichter unterhalb des hexagonalen Limits betrieben wird, ist eine Übermodulation vermieden, die durch Anforderung von nicht realisierbaren Spannungswerten zu Regelschwierigkeiten führen kann.

Entsprechend der EP 2 192 682 A 1 wird vorgeschlagen, den Spannungsbedarf einer Drehfeldmaschine über ein Kennlinienfeld für den feldbildenden Strom $i_d$ einzustellen, so dass der Querstromregler sowie der Längsstromregler keine Stellbegrenzung erreichen. Würden die Stellgrößen der Stromregler durch die maximal mögliche Spannung begrenzt, so könnten die Soll-stromkomponenten $i_d$, $i_q$ nicht mehr geführt werden und das Verhalten der Maschine würde unbestimmt. Auch hier wird eine Übermodulation also bewusst vermieden.

Aufgabe der Erfindung ist es, ein Verfahren zur Steuerung eines Umrichters mittels Pulsweitenmodulation der eingangs genannten Art anzugeben, bei dem die einzelnen Umrichterschaltelemente möglichst wenig belastet werden. Die Erfindung soll es insbesondere ermöglichen, einen Umrichter mit möglichst kostengünstigen Schaltelementen zu versehen.

Diese Aufgabe wird für ein Verfahren der eingangs genannten Art erfindungsgemäß dadurch gelöst, dass die Schaltelemente wenigstens einer Halbbrücke zumindest zeitabschnittsweise abgewandelt angesteuert werden, indem die Schaltimpulse von wenigstens zwei aufeinander folgenden Perioden der Pulsweitenmodulation zeitlich als ein Schaltimpuls unmittelbar aneinandergereiht werden.

Die Erfindung geht dabei in einem ersten Schritt von der Überlegung aus, dass sich die Modulationsverfahren einer Drei-Phasen-Taktung, einer Zwei-Phasen-Taktung und einer Ein-Phasen-Taktung hinsichtlich der Schaltzyklen, der Stromleitungszyklen und der diesbezüglichen Aufteilung auf die Schaltelemente voneinander unterscheiden. Wird ein Schaltelement weniger geschaltet, so verringert sich sein Stress durch Erwärmung aufgrund von Schaltverlusten auf Kosten des Stresses durch Erwärmung aufgrund von Leitungsverlusten. Wird eine Halbbrücke dauerhaft auf das untere oder auf das obere Zwischenkreispotential geklemmt, so wird das jeweils eingeschaltete Schaltelement der Halbbrücke einseitig belastet, wohin gegen das andere Schaltelement keinen Stress erfährt. Ein Modulationsverfahren, welches eine Halbbrücke insofern für gewisse Zeiträume einseitig klemmt, führt somit zu einer höheren Belastung einzelner Schaltelemente, weil die Verluste in einer Halbbrücke asymmetrisch aufgeteilt werden. Andererseits spielt dieser Umstand keine Rolle mehr, wenn sich bei höheren Drehfeldfrequenzen die einseitige Durchschaltung einzelner Schaltelemente wiederrum auf alle Schaltelemente des Umrichters zyklisch verteilt. Die bekannten Modulationsverfahren weisen insofern jeweils spezifische Vorteile, aber auch spezifische Nachteile auf.

In einem zweiten Schritt erkennt die Erfindung, dass sich in allen bekannten Modulationsverfahren die Schaltverluste der Schaltelemente weiter reduzieren lassen, wenn die Schaltelemente wenigstens einer Halbbrücke zumindest zeitabschnittsweise gegenüber dem regulären PWM-Verfahren abgewandelt angesteuert werden, indem die Schaltimpulse von wenigstens zwei aufeinander folgenden Perioden der Pulsweitenmodulation zeitlich als ein Schaltimpuls unmittelbar aneinandergereiht werden. Mit anderen Worten werden die Schaltimpulse von wenigstens zwei aufeinander folgenden Perioden der Pulsweitenmodulation während der abgewandelten Steuerung zu einem einzigen Schaltimpuls zusammengefasst, der sich über die beiden Perioden erstreckt und der dieselbe Dauer wie die beiden einzelnen Schaltimpulse zusammen aufweist. Durch diese Zusammenfassung von wenigstens zwei Schaltimpulsen zu einem einzigen Schaltimpuls verringert sich die Anzahl der Schaltzyklen, da die Schaltwechsel zwischen den ursprünglichen Schaltimpulsen durch deren Zusammenführen entfallen. Es wird insofern ersichtlich, dass sich durch das angegebene Verfahren die Schaltverluste in den Schaltelementen unabhängig von den angewendeten Modulationsverfahren des Umrichters weiter verringern lassen.

Die Erfindung eröffnet insofern die Möglichkeit, den Umrichter insbesondere im Zusammenspiel mit den bekannten Modulationsverfahren so zu betreiben, dass möglichst kostengünstige Schaltelemente eingesetzt werden können. Die Erfindung kann aber auch losgelöst von spezifischen Modulationsverfahren zur Steuerung eines Umrichters angewendet werden.

Während der abgewandelten Steuerung ändert sich der theoretische Tastgrad der Pulsweitenmodulation, also das Verhältnis der Impulsdauer zur Periodendauer, nicht. Allerdings wird die Taktfrequenz der Schaltelemente verringert. Andererseits kann man kann auch sagen, dass sich während der abgewandelten Steuerung die Periodendauer der Pulsweitenmodulation und damit deren Frequenz reduziert, wenn man die durch Aneinanderreihung der Schaltimpulse zusammengefassten Perioden als eine neue PWM-Periode betrachtet.

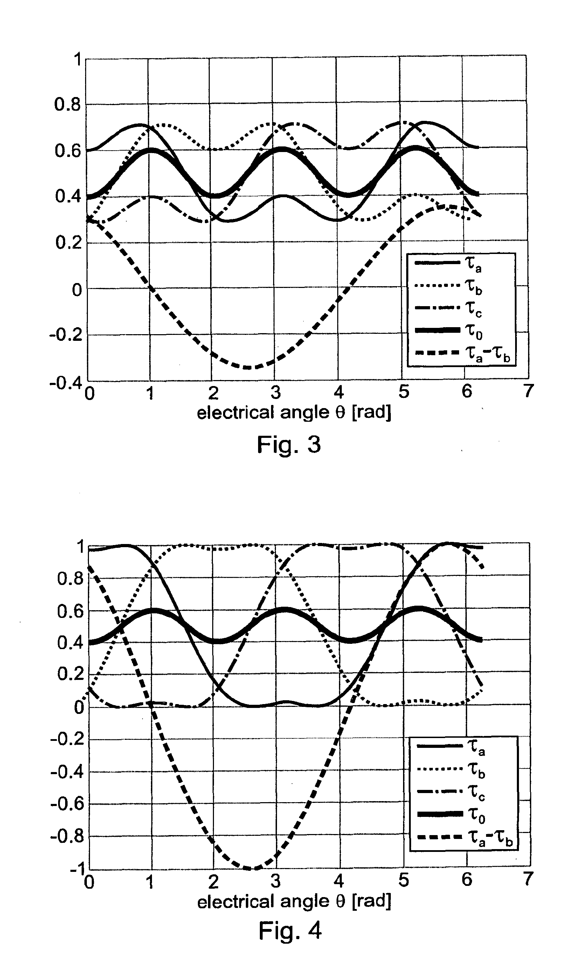

Die mit der Erfindung vorteilhaft kombinierbaren einzelnen Modulationsverfahren werden nachfolgend zum besseren Verständnis unter Zuhilfenahme der Figuren 3 - 8 näher beschrieben.

Die Figuren 3 - 8 zeigen zeitliche Verläufe der Einschaltverhältnisse $\tau_a$, $\tau_b$, $t_c$ der jeweiligen Halbbrücken eines dreiphasigen Umrichters, des jeweils gewählten Nullsystems $\tau_0$ sowie der gebildeten Differenz $\tau_a$ - $\tau_b$. Die Verläufe der Einschaltverhältnisse $\tau_a$, $\tau_b$, $\tau_c$ entsprechen den Verläufen der Einzelpotentiale der den jeweiligen Halbbrücken zugeordneten Phasen. Der Verlauf der Differenz $\tau_a$ - $\tau_b$ entspricht dem Verlauf der Spannung zwischen den Phasen der entsprechenden Halbbrücken a und b.

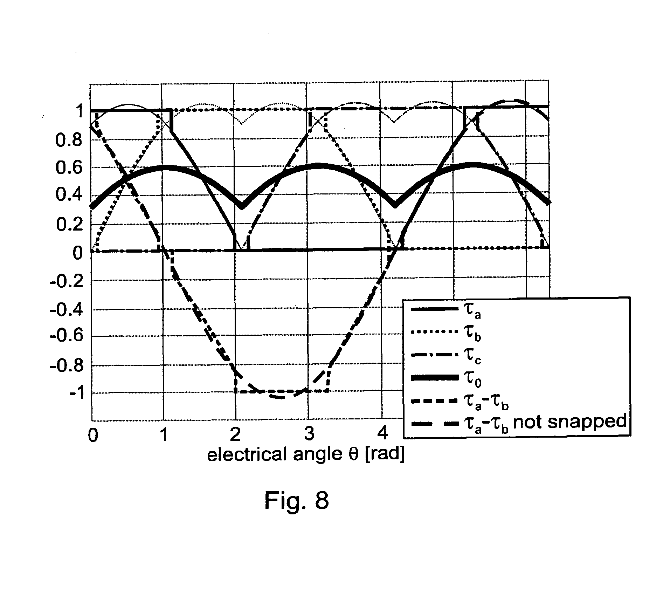

Es wird unmittelbar ersichtlich, dass mit Ausnahme von Figur 8, die eine Übermodulation zeigt, die Differenz $\tau_a$ - $\tau_b$ unabhängig von der Wahl des Nullsystems $\tau_0$ einen sinusförmigen Verlauf zeigt. Insofern wird der Freiheitsgrad hinsichtlich der Wahl der Modulationsverfahren erkennbar, sofern es wie bei einem Drehfeldsystem, und insbesondere bei einer Drehfeldmaschine, nur auf die Differenzspannung zwischen den einzelnen Phasen des Umrichters ankommt.

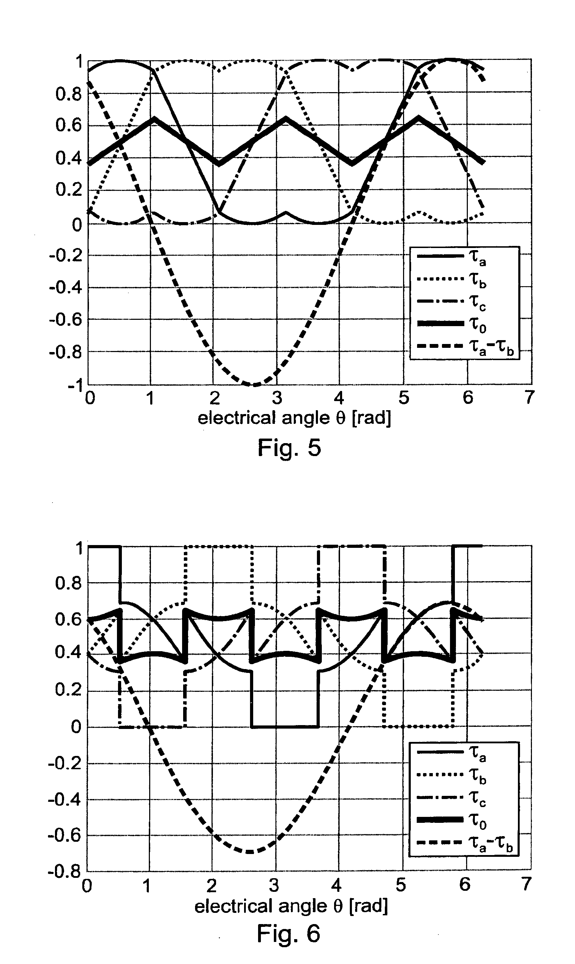

In den Figuren 3 - 5 sind Modulationsverfahren einer Drei-Phasen-Taktung dargestellt. Das Nullsystem $\tau_0$ weist in den Figuren 3 und 4 einen Gleichanteil und eine dritte Oberwelle zur Grundwelle des Differenzsignals auf. In Figur 5 setzt sich das Nullsystem $\tau_0$ aus einem Gleichanteil und einer Dreiecksfunktion zusammen. Der Gleichanteil ist jeweils mit einem Wert von 0,5 gewählt. In Figur 3 ist die Amplitude $\hat{\tau}$ der Aussteuerung mit 0,2 kleiner gewählt als in Figur 4 mit einem Wert von $\hat{\tau}$ von 0,577. Der letztgenannte Wert stellt die maximal mögliche verzerrungsfreie Grundschwingungsamplitude dar. Man erkennt dies in Figur 4 daran, dass die Einschaltverhältnisse der einzelnen Halbbrücken sich überwiegend im Bereich von "Eins" bewegen, was einer Ansteuerung des Umrichters an der Spannungsdecke entspricht.

Das Modulationsverfahren einer Drei-Phasen-Taktung ist dadurch gekennzeichnet, dass alle drei Halbbrücken während einer Periodendauer der Pulsweitenmodulation getaktet werden, d.h. das obere und das untere Schaltelement jeder Halbbrücke werden jeweils komplementär angesteuert und ändern während jeder Periode das Schaltmuster. Die Ausgestaltung des Nullsystems bzw. der Nullspannung ist dabei offen. Üblich sind beispielsweise ein Gleichanteil oder ein Gleichanteil mit überlagerten Oberschwingungen der Grundwelle, die das Differenzsignal zwischen jeweils zwei Phasen aufweisen soll.

Der in Figur 5 dargestellt Verlauf entspricht einer Pulsweitenmodulation entsprechend einer Raumzeigermodulation gemäß Figur 2. Demnach werden sektorenweise die jeweiligen Spannungskomponenten aus den den Sektor begrenzenden Basisvektoren unter Zuschaltung jeweils eines der Nullvektoren gebildet. Jeder Sektor entsprechend Figur 2 entspricht hierbei einem 60°-Abschnitt entsprechend der in Figur 5 dargestellten Grundwelle des Differenzsignals.

Die Vorteile einer Drei-Phasen-Taktung liegen in der gleichmäßigen Verteilung der Leitungsverluste auf alle Bauelemente. Nachteilig an dem Modulationsverfahren einer Drei-Phasen-Taktung sind die permanent auftretenden Schaltverluste in den Schalt- bzw. Bauelementen.

In den Figuren 6 - 7 sind nun die entsprechenden zeitlichen Verläufe der Einschaltverhältnisse $\tau_a$, $\tau_b$, $\tau_c$, des Nullsystems $\tau_0$, sowie der Differenz der Einschaltverhältnisse $\tau_a - \tau_c$ für Modulationsverfahren einer Zwei-Phasen-Taktung dargestellt. Da die Wahl des Nullsystems innerhalb gewisser Grenzen frei ist, kann das Nullsystem so gestaltet werden, dass jeweils nur zwei der drei Halbbrücken während einer Periode der Pulsweitenmodulation ihr Schaltmuster ändern. Das Potential der jeweils dritten Halbbrücke bleibt dauerhaft entweder auf das obere oder auf das untere Zwischenkreispotential geklemmt. Das Modulationsverfahren einer Zwei-Phasen-Taktung ist auch unter dem Begriff einer Zwischenkreisgeklemmten Pulsweitenmodulation (engl.: "bus clamped PWM") bekannt. Bezogen auf eine komplette Periode des gewünschten Differenzsignals zwischen zwei Phasen bleibt immer für 120° eine Halbbrücke mit der oberen oder der unteren (was bevorzugt ist) Zwischenkreisschiene geklemmt oder wird abwechselnd für jeweils 60° auf die untere Schiene und dann eine andere Halbbrücke für 60° auf die obere Schiene geklemmt.

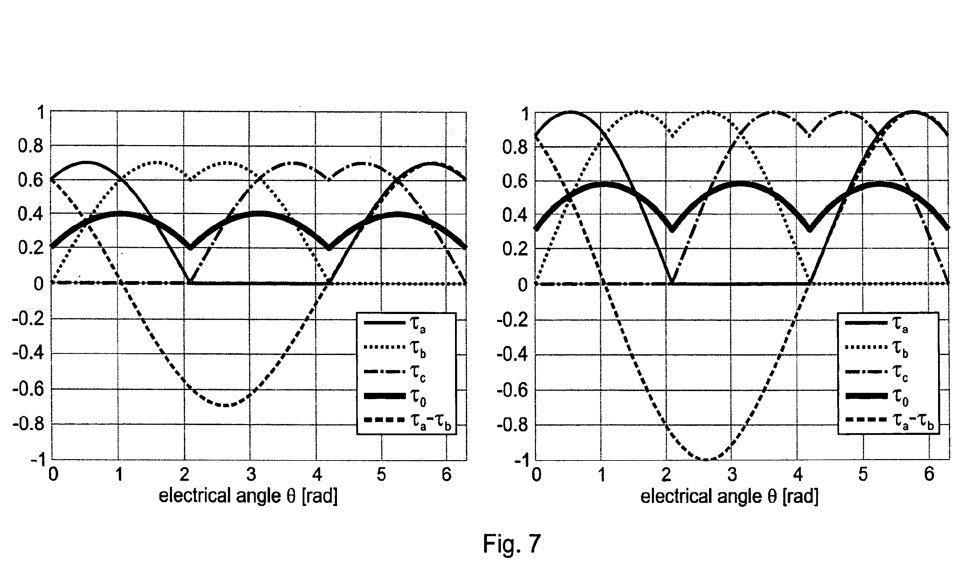

In Figur 6 ist das Modulationsverfahren einer Zwei-Phasen-Taktung gemäß der "60° bus clamped" - Methode und in den Figuren 7 das Modulationsverfahren einer Zwei-Phasen-Taktung gemäß der "120° bus clamped" - Methode gezeigt. In den Figuren 6 und der linken Abbildung gemäß Figur 7 ist der Wert der Amplitude $\hat{\tau}$ mit 0,4 gewählt. In der rechten Abbildung gemäß Figur 7 ist die Amplitude mit einem Wert von $\hat{\tau} = 0,577$, also der maximal möglichen verzerrungsfreien Grundschwingungsamplitude vorgegeben. Das jeweilige Nullsystem

$\tau_0$ ergibt sich aus der entsprechenden Rechenvorschrift für die gewünschte Zwei-Phasen-Taktung.

Entsprechend Figur 6 werden immer nur zwei Phasen getaktet, wobei die jeweils dritte Phase für 60° auf abwechselndes Zwischenkreispotential dauerhaft geklemmt wird. In den Figuren 7 werden ebenfalls jeweils nur zwei Phasen getaktet, wobei jedoch die jeweils dritte Phase für 120° auf dasselbe Zwischenkreispotential dauerhaft geklemmt ist.

Das Modulationsverfahren einer Zwei-Phasen-Taktung weist die Vorteile eines insgesamt um ein Drittel reduzierten Schaltverlustes gegenüber dem Modulationsverfahren einer Drei-Phasen-Taktung auf. Die Schalthäufigkeit der Schaltelemente ist um ein Drittel geringer. Nachteilig leiten jedoch die dauerhaft geklemmten Schaltelemente den Strom zu 100 % und können dadurch vor allem bei langsamen Drehfeldfrequenzen mehr gestresst werden als bei dem Modulationsverfahren einer Drei-Phasen-Taktung.

In Figur 8 ist nun das Modulationsverfahren einer Ein-Phasen-Taktung dargestellt. Dabei ändert jeweils nur eine der drei Halbbrücken während einer Periode der Pulsweitenmodulation ihr Schaltmuster. Ausgehend von der rechten Abbildung gemäß Figur 7 wird ersichtlich, dass das dargestellte Modulationsverfahren gemäß Figur 8 möglich wird, indem der Umrichter theoretisch oberhalb der Spannungsdecke betrieben wird, also theoretische Einschaltverhältnisse für die einzelnen Halbbrücken von > 1 gefordert werden. Mit anderen Worten führt das Modulationsverfahren einer Ein-Phasen-Taktung zu einer Übermodulation, so dass die Grundwelle des Ausgangssignals als Differenz zwischen jeweils zwei Phasen nicht mehr verzerrungsfrei dargestellt werden kann. In Figur 8 sind hierzu die eigentlich geforderten Einschaltverhältnisse und die sich ergebenden Differenzsignale gegenüber den real eingestellten dünn gestrichelt dargestellt. Das sinusförmige Differenzsignal $\tau_a - \tau_b$ ist gegenüber einem gewünschten Sinusverlauf verzerrt.

Das Modulationsverfahren einer Ein-Phasen-Taktung weist den Vorteil eines insgesamt um zwei Drittel reduzierten Schaltverlustes gegenüber dem Modulationsverfahren einer Drei-Phasen-Taktung auf. Die Einschalthäufigkeit der Umschaltelemente ist um zwei Drittel reduziert. Nachteilig an einem Modulationsverfahren einer Ein-Phasen-Taktung ist die Verzerrung der Grundwelle. Zudem erfordert eine Ein-Phasen-Taktung eine spezielle Auslegung des Regelkreises, da für die Halbbrücken theoretische Einschaltverhältnisse vorgegeben werden, die der Umrichter real nicht mehr im Stande ist zu liefern.

Im Übermodulationsbereich wird von den Stromreglern bei einer feldorientierten Regelung mehr Ausgangsspannung verlangt, als tatsächlich ausgegeben werden kann. In diesem Fall wird statt des eigentlich benötigten Einschaltverhältnisses von > 1 das maximal mögliche Einschaltverhältnis von "eins" gewählt. Im Übermodulationsbereich werden große Mengen an Oberschwingungsströmen erzeugt. Die Stromregler sind dann stark von Oberschwingungsströmen belastet. Stromreglersättigung und oszillierende Operationen führen zu Leistungsabfall.

Bevorzugt werden die Schaltelemente wenigstens einer Halbbrücke abgewandelt angesteuert, indem die Schaltimpulse von wenigstens drei aufeinander folgenden Perioden zeitlich als ein Schaltimpuls unmittelbar aneinandergereiht werden. Hierdurch verringert sich bei gleichbleibendem Tastgrad innerhalb der drei zusammengefassten Perioden die Schaltfrequenz um ein Drittel; die Anzahl der Schaltvorgänge sinkt von sechs bei drei beabstandeten Schaltimpulsen auf zwei für einen einzigen zusammenhängenden Schaltimpuls. Allgemein können n Schaltimpulse aus n aufeinanderfolgender Perioden der Pulsweitenmodulation zusammengefasst werden, wobei sich die Schaltfrequenz der Schaltelemente um das 1/n-fache verringern. Entsprechend sind die Schaltverluste um das 1/n-fache reduziert.

In einer vorteilhaften Ausführungsvariante werden die Schaltelemente verschiedener Halbbrücken oder Phasen zu verschiedenen Zeiten abgewandelt angesteuert. Beispielsweise wechseln sich bei den Modulationsverfahren einer Zwei-Phasen-Taktung oder einer Ein-Phasen-Taktung die jeweils aktiv angesteuerten bzw. getakteten Halbbrücken und die jeweils dauerhaft geklemmten Halbbrücken ab. Das vorgeschlagene Verfahren sieht hierbei vor, die Schaltelemente jeweils einer der aktiv getakteten Halbbrücken abgewandelt unter einer Verringerung der Schaltfrequenz und der Schaltverluste anzusteuern.

In einer weiteren bevorzugten Variante werden zumindest zeitabschnittsweise die Schaltelemente mehrerer Halbbrücken gleichzeitig angesteuert. Insbesondere können abhängig vom gewählten Modulationsverfahren des Umrichters die Schaltelemente mehrerer jeweils aktiv getakteter Halbbücken zeitgleich abgewandelt unter Verringerung ihrer Schaltfrequenz angesteuert werden.

Um die Spannungsdifferenzen zwischen den einzelnen Phasen des Umrichters auch bei kleinen Zeitmitteln entsprechend dem gewünschten Spannungsverlauf zu halten, werden zweckmäßigerweise zumindest zeitabschnittsweise wenigstens die Schaltelemente jeweils derjenigen Halbbrücke abgewandelt angesteuert, deren Mittenabgriff aktuell mit dem größten Tastgrad geschaltet wird. Diese Vorgehensweise ist ebenso vorteilhaft, um einen durch das abgewandelte Verfahren auftretenden Stromrippel zu verringern. Die Schaltimpulse der mit dem größten Tastgrad geschalteten Halbbrücke weisen in benachbarten Perioden der Pulsweitenmodulation zeitlich die geringste Distanz zueinander auf. Ein Aneinanderlegen dieser Schaltimpulse führt insofern gegenüber den Schaltimpulsen der anderen Phasen zu den geringsten "Musterverschiebungen" im PWM-Signal. Bevorzugt hierzu werden die Schaltelemente der jeweils anderen, nicht mit dem größten Tastgrad gesteuerten Halbbrücken angesteuert, indem in den der abgewandelten Steuerung entsprechenden Perioden der zeitliche Abstand der Schaltimpulse entsprechend dem ursprünglichen zeitlichen Abstand der aneinander gereihten Schaltimpulse verkürzt wird. Mit anderen Worten werden die Schaltimpulse in wenigstens zwei oder in allen Phasen entsprechend der Distanz der Schaltimpulse aus der mit dem größten Tastgrad gesteuerten Phase gegeneinander verschoben. Hieraus resultiert zwischen den einzelnen Phasen eine geringstmögliche "Musterverschiebung" zueinander.

Die vorgenannte Verschiebung der Schaltimpulse aufeinanderfolgender Perioden der Pulsweitenmodulation kann bezüglich verschiedener Phasen oder Halbbrücken insbesondere derart vorgenommen werden, dass eine gegebenenfalls zu einer Stromregelung eines elektrischen Verbrauchers notwendige Messung der Phasenströme weiter taktgleich mit der Pulsweitenmodulation erfolgen kann. Betrachtet man zum Beispiel Figur 1, die einen dreiphasigen Umrichter darstellt, so können die Ströme in den einzelnen Phasen $U_a$, $U_b$, $U_c$ bei der gezeigten Topologie nur dann gemessen werden, wenn die jeweilige Halbbrücke auf die untere Zwischenkreisschiene geklemmt ist. Innerhalb einer Periode der Pulsweitenmodulation können die Ströme insbesondere noch taktgleich gemessen werden, wenn zwei der drei Halbbrücken zumindest abschnittsweise gleichzeitig auf die untere Zwischenkreisschiene geklemmt sind. Der dritte, fehlende Phasenstrom kann in einem Drehfeldsystem aus den beiden anderen gemessenen Phasenströmen rekonstruiert werden.

Durch das Aufeinanderschieben der Schaltimpulse im Muster der Pulsweitenmodulation zur Ansteuerung der Schaltelemente einer oder mehrerer Halbbrücken können innerhalb einer Periode ehemals vorhandene Bereiche einer möglichen Phasenstrommessung reduziert werden. Insbesondere werden Mittenbereiche zwischen zwei benachbarten Perioden durch das Aufeinanderschieben von Schaltimpulsen für die Strommessung "verschlossen". Mit anderen Worten ist eine Messung der Phasenströme in einem solchen Fall nicht mehr mit der Taktfrequenz der Pulsweitenmodulation möglich. Bei dem Verschieben der Schaltimpulse innerhalb einer Periode der Pulsweitenmodulation kann jedoch unter Betrachtung der verschiedenen Phasen und der verschiedenen Modulationsverfahren auf diesen Umstand Rücksicht genommen werden, so dass die Möglichkeit einer Strommessung im Takt der Pulsweitenmodulation erhalten bleiben kann. Vorteilhafterweise wird die abgewandelte Ansteuerung zeitabschnittsweise abhängig von einem einen am Umrichter angeschlossenen Wechselstromteilnehmer charakterisierenden Parameter vorgenommen. Bei dem Wechselstromteilnehmer handelt es sich insbesondere um einen Wechselstromverbraucher, beispielsweise um eine Wechselstrommaschine. Das abgewandelte Verfahren kann insbesondere in Abhängigkeit von einer Last (z. B. repräsentiert durch einen elektrischen Strom, durch eine elektrische Leistung, durch ein Drehmoment oder durch eine Lasttemperatur), in Abhängigkeit von einer Geschwindigkeit (z. B: einer Wechselstrommaschine) oder in Abhängigkeit von einer Kühltemperatur etc. vorgenommen werden. Das abgewandelte Verfahren kann hierbei beispielhaft bei Über- oder Unterschreiten eines bestimmten Wertes des entsprechenden Parameters ein- bzw. ausgeschaltet werden. Auch kann in Abhängigkeit vom aktuellen Wert eines entsprechenden Parameters festgelegt werden, in welchen Phasen die Schaltelemente jeweils abgewandelt angesteuert werden. Insbesondere können abhängig von einem aktuellen Wert des betrachteten Parameters die Musterverschiebungen in den verschiedenen Phasen verschieden vorgenommen werden.

Bevorzugt wird als Parameter ein einen Lastzustand und/oder einen Betriebszustand des Wechselstromteilnehmers charakterisierender Parameter herangezogen.

Das beschriebene Verfahren kann zweckmäßigerweise für ein dreiphasiges Drehfeldsystem eingesetzt werden. Bevorzugt wird hierbei ein dreiphasiger Umrichter mit einem Modulationsverfahren betrieben, das ausgewählt ist aus der Gruppe, die eine Drei-Phasen-Taktung, eine Zwei-Phasen-Taktung und eine Ein-Phasen-Taktung enthält, wobei zumindest zeitabschnittsweise die Schaltelemente wenigstens einer der jeweils getakteten Halbbrücken abgewandelt angesteuert werden. Unter Berücksichtigung der spezifischen Vorteile der jeweiligen Modulationsverfahren können unter Einsatz des abgewandelten Steuerungsverfahrens der Pulsweitenmodulation die Schaltverluste der Schaltelemente weiter verringert werden.

In einer zweckmäßigen Variante wird der dreiphasige Umrichter mit einem Modulationsverfahren der Drei-Phasen-Taktung oder der Zwei-Phasen-Taktung betrieben, wobei zumindest zeitabschnittsweise die Schaltelemente von zwei getakteten Halbbrücken abgewandelt angesteuert werden.

Da unter Anwendung des vorgeschlagenen Verfahrens gegebenenfalls Stromrippel in den Phasenströmen erzeugt werden, kann die abgewandelte Steuerung in einem Kompromiss bevorzugt nur zur Steuerung der Schaltelemente derjenigen Halbbrücke oder Phase angewendet werden, in der die Schaltverluste hoch liegen, was also zumindest in einer jeweils aktiv geschalteten Phase oder Halbbrücke der Fall ist. Mit anderen Worten wird bevorzugt - wie bereits ausgeführt - abhängig von dem jeweils gewählten Modulationsverfahren des Umrichters jeweils wenigstens eine der aktiv getakteten Halbbrücken abgewandelt angesteuert.

Um negative Auswirkungen auf Oberschwingungen zu reduzieren, wird das abgewandelte Steuerverfahren bevorzugt zeitlich mit dem regulären Steuerungsverfahren der Pulsweitenmodulation abgewechselt. Da sich während der abgewandelten Steuerung die Schaltfrequenz der Schaltelemente verringert, kann dies zu einem unerwünschten, hörbaren Geräusch führen. Wird das abgewandelte Steuerungsverfahren mit dem regulären Steuerungsverfahren abgewechselt, so wird auch diese unerwünschte Geräuschentwicklung reduziert.

In einer anderen Variante, die ebenfalls zu einer Reduzierung der durch die verringerte Taktfrequenz der Schaltelemente resultierenden Geräusche führt, wird die Taktfrequenz der Pulsweitenmodulation zumindest während der Zeitabschnitte der abgewandelten Steuerung angehoben.

Ausführungsbeispiele der Erfindung werden anhand einer Zeichnung näher erläutert. Dabei zeigen:

Fig. 1          Das Schaltbild eines bekannten dreiphasigen Umrichters,

Fig. 2          eine Hexagon-Darstellung der Raumzeigermodulation eines dreiphasigen Umrichters,

Fig. 3 - 8      den jeweils zeitlichen Verlauf der Einschaltverhältnisse der Halbbrücken, des gewählten Nullsystems und des Phasen-Differenzsignals für verschiedene Modulationsverfahren,

Fig. 9          die verschiedenen Modulationsverfahren für einen dreiphasigen Umrichter jeweils in einer Augenblicksdarstellung einer PWM-Periode,

Fig. 10         für verschiedene Modulationsverfahren eines dreiphasigen Umrichters Augenblicksdarstellungen einer PWM-Periode mit abgewandelten Steuerverfahren,

Fig. 11         für verschiedene Modulationsverfahren eines dreiphasigen Umrichters Augenblicksdarstellungen einer PWM-Periode mit einer abgewandelten Steuerung, wobei Schaltimpulse von drei abfolgenden Perioden aneinandergereiht werden,

Fig. 12 - 14    verschiedene Zeitabfolgen von Schaltimpulsen für einen dreiphasigen Umrichter unter Anwendung des abgewandelten Steuerungsverfahrens.

Die Figuren 1-2 sowie 3-8 sind bereits im Zusammenhang der Erfindungsbeschreibung ausführlich erläutert. Entsprechend wird auf die diesbezüglichen Beschreibungspassagen verwiesen.

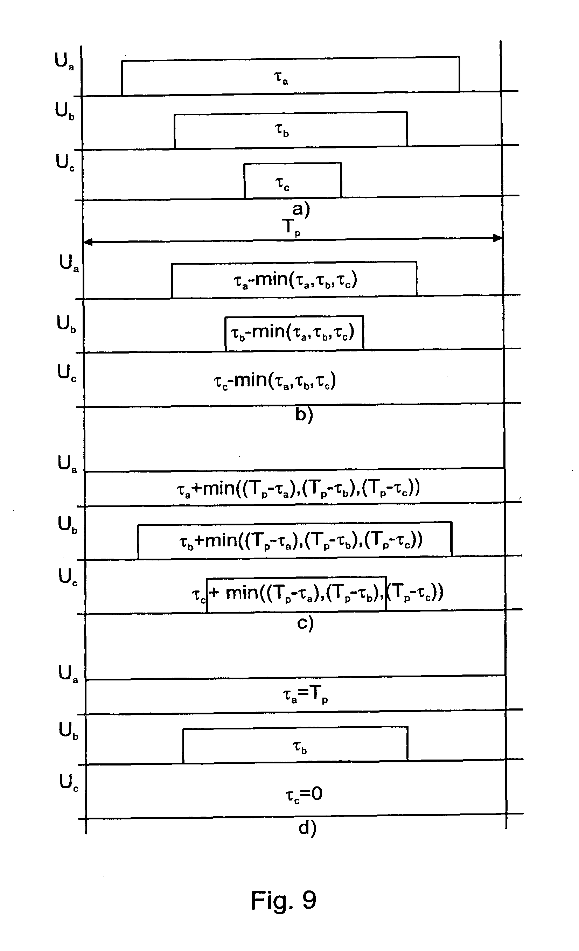

In Figur 9 ist eine Augenblicksdarstellung einer PWM-Periode eines PWM-Signals zur Ansteuerung eines dreiphasigen Umrichters entsprechend Figur 1 dargestellt. Die Periodendauer $T_P$ ist eingezeichnet. In Figur 9 sind vier unterschiedliche Modulationsverfahren des dreiphasigen Umrichters entsprechend der dargestellten Varianten a), b), c) und d) erkennbar. Für jede der dargestellten Varianten sind die drei Phasen durch ihre Pha-

senspannungen $U_a$, $U_b$ und $U_c$ markiert. Weiter sind die jeweiligen Einschaltdauern $\tau_a$, $\tau_b$, $\tau_c$ entsprechend den Figuren 3-8 bzw. entsprechend der vorstehenden Beschreibung innerhalb einer Periode als Schaltimpulse verschiedener Dauer dargestellt. Über das Verhältnis der Impulsdauer zur Periodendauer $T_P$ ergibt sich der gewünschte Tastgrad und damit die sich im Mittel an der entsprechenden Phase einstellende Spannung. Ein Schaltimpuls $\tau$ entspricht gemäß den vorstehend beschriebenen Definitionen einem Schalten des Mittenabgriffs der entsprechenden Halbbrücke an die obere Zwischenkreisschiene. Außerhalb des Schaltimpulses weist $\tau$ den Wert Null auf, so dass in diesen Bereichen der dargestellten Periode der Mittenabgriff der jeweiligen Halbbrücke an die untere Zwischenkreisschiene geklemmt ist.

Die in Figur 9 gezeigte Variante a) entspricht dem Modulationsverfahren einer Drei-Phasen-Taktung für einen Umrichter entsprechend Figur 1. Zu jedem Zeitpunkt und insbesondere zum dargestellten aktuellen Zeitpunkt werden alle drei Phasen bzw. alle drei Halbbrücken getaktet. In allen Phasen der PWM-Signale treten Schaltimpulse auf.

Die Varianten b) und c) entsprechen Modulationsverfahren einer Zwei-Phasen-Taktung, wie sie in den Figuren 6 und 7 dargestellt sind. Entsprechend Variante b) ist eine Phase (gekennzeichnet durch $U_c$) dauerhaft auf die untere Zwischenkreisschiene geklemmt. Die anderen Phasen $U_a$ und $U_b$ werden getaktet. Die Variante b) entspricht somit dem Modulationsverfahren einer Zwei-Phasen-Taktung entsprechend Figur 7.

In Variante c) werden die Phasen $U_b$ und $U_c$ getaktet. Abschnittsweise (vorliegend im dargestellten aktuellen Zeitpunkt) ist die Phase $U_a$ bzw. der Mittenabgriff der entsprechenden Halbbrücke auf das obere Zwischenkreispotential geklemmt. Variante c) entspricht dem Modulationsverfahren einer Zwei-Phasen-Taktung, wie es in Figur 6 gezeigt ist.

Gemäß Variante d) sind zwei Phasen ($U_a$, $U_c$) bzw. die Mittenabgriffe der entsprechenden Halbbrücken auf die obere bzw. die untere Zwischenkreisschiene geklemmt. Es wird lediglich eine Phase (gekennzeichnet durch $U_b$) getaktet. Variante d) entspricht dem Modulationsverfahren einer Ein-Phasen-Taktung wie es in Figur 8 dargestellt ist.

Zusätzlich sind in Fig. 9 Berechnungsvorschriften eingezeichnet, wie sich die Einschaltverhältnisse $\tau_a$, $\tau_b$, $\tau_c$ der jeweiligen Modulationsverfahren aus den entsprechenden Einschaltverhältnissen des symmetrischen Modulationsverfahrens einer Drei-Phasen-Taktung ergeben.

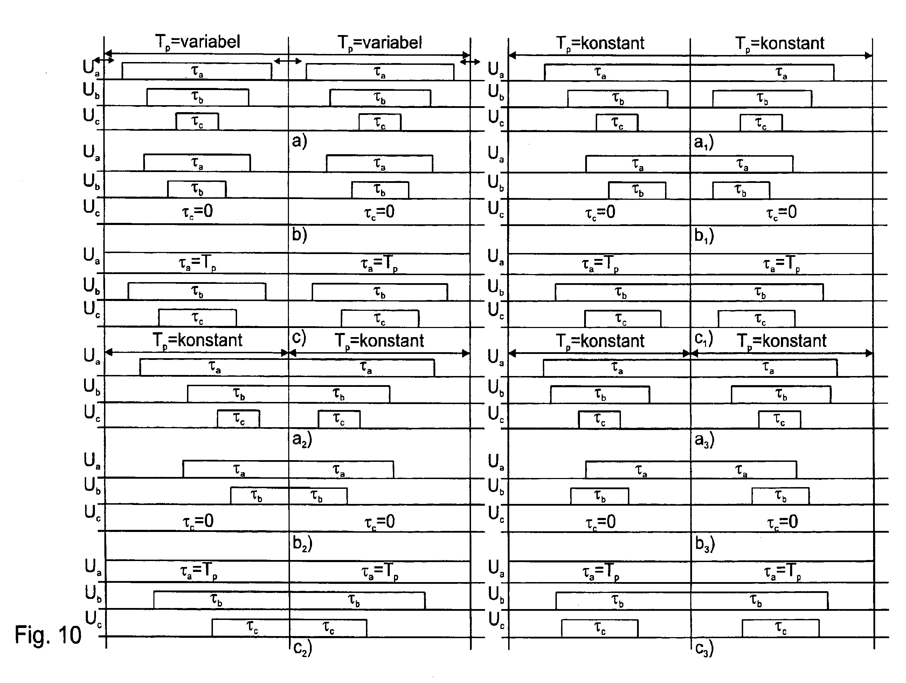

In Figur 10 sind in zwei nebeneinander angeordneten Darstellungen zwei aufeinanderfolgende Perioden eines PWM-Signals entsprechend Figur 9 dargestellt. Die Phasen, die Einschaltzeiten und die Periodendauer sind entsprechend markiert.

In Figur 10, Abb. links sind zum besseren Verständnis nochmals die Varianten a), b) und c) verschiedener Modulationsverfahren für einen dreiphasigen Umrichter entsprechend Figur 9 eingezeichnet. Die weiteren Varianten stellen ein abgewandeltes Steuerungsverfahren dar, wobei Schaltimpulse von aufeinanderfolgenden Perioden zu einem einzigen Schaltimpuls aneinandergereiht werden, wodurch die Schaltfrequenz der Schaltelemente und entsprechend die Schaltverluste verringert werden.

In den Varianten $a_1$), $b_1$) und $c_1$) werden die Schaltimpulse derjenigen Phase aneinandergereiht, die mit dem größten Tastgrad angesteuert wird. Entsprechend der "zusammengeschobenen" Distanz dieser längsten Schaltimpulse werden die Schaltimpulse auch der jeweils anderen Phasen aneinandergeschoben. In Variante $a_1$) und $b_1$) sind jeweils die Schaltimpulse der Phasen $U_a$ aneinandergeschoben und zu einem einzigen Schaltimpuls zusammengefasst. Die Schaltimpulse der jeweils anderen Phasen sind zeitlich entsprechend näher aneinandergerückt. Eine Messung der Phasenströme entsprechend der in Figur 1 gezeigten Topologie ist weiter im Takt der Pulsweitenmodulation möglich.

In Variante $c_1$) sind die Schaltimpulse zweier benachbarter Perioden für die Phase $U_b$ aneinandergeschoben und zu einem einzigen Schaltimpuls vereint. Die Schaltimpulse in der Phase $U_c$ rücken zeitlich näher zusammen. Die Messung der Phasenströme ist nicht mehr im Takt der Pulsweitenmodulation möglich, da der Abstand derjenigen Bereiche, in denen wenigstens zwei Halbbrücken auf die untere Zwischenkreisscheine geklemmt sind (es tritt ein Nullwert innerhalb der Periode auf) vergrößert ist.

In den Varianten $a_2$), $b_2$) und $c_2$) sind zusätzlich die Schaltimpulse der benachbarten Periode einer weiteren Phase aneinandergeschoben. In den Varianten $a_2$) und $b_2$) sind dies die Schaltimpulse der Phasen $U_b$. In Variante $c_2$) sind dies die Schaltimpulse der Phase $U_c$.

Die Varianten $a_3$), $b_3$) und $c_3$) unterscheiden sich von den Varianten $a_1$), $b_1$) und $c_1$) dadurch, dass die Schaltimpulse in den nicht abgewandelt angesteuerten Phasen zeitlich unverrückt bleiben.

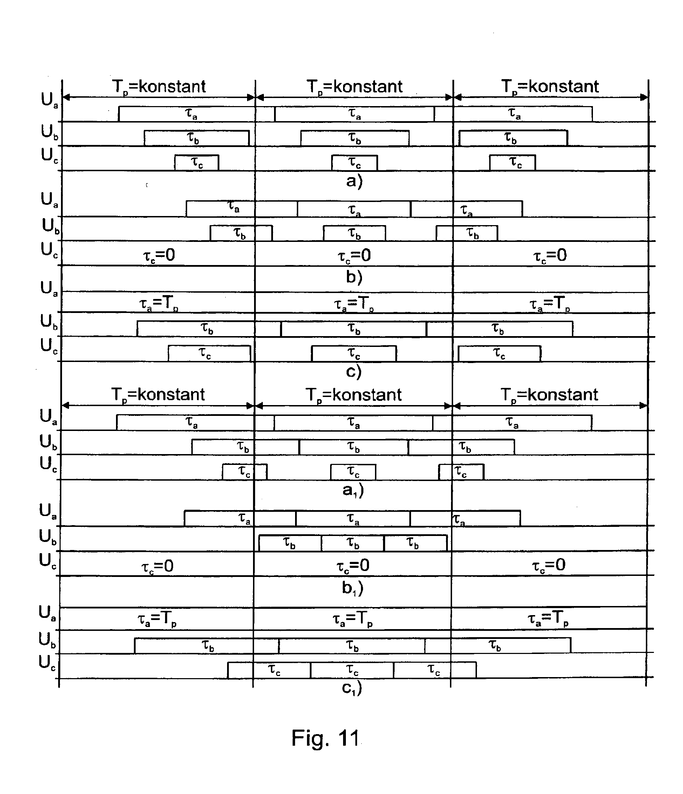

In Figur 11 ist der Augenblickszustand für drei aufeinanderfolgende Perioden der Pulsweitenmodulation dargestellt. In Varianten a), b) und c) werden die Schaltimpulse der jeweils mit dem größten Tastgrad angesteuerten Phase bzw. Halbbrücke von drei aufeinanderfolgenden Perioden aneinandergereiht und zu einem einzigen Schaltimpuls zusammengesetzt. Die Schaltimpulse der jeweils anderen Phasen werden mit gleichem Zeitversatz aufeinander zugeschoben. Es wird ersichtlich, dass sich in der abgewandelt angesteuerten Phase die Schaltfrequenz um ein Drittel reduziert.

In den Varianten $a_1$), und $c_1$) werden die Schaltimpulse jeweils einer weiteren aktiven Phase ebenfalls aneinandergereiht und zu einem einzigen Schaltimpuls zusammengefasst. In Varianten $a_1$) und $b_1$) sind die Schaltfrequenzen und damit die Schaltverluste in den Phasen $U_b$ zusätzlich um ein Drittel reduziert. In der Variante $c_1$) sind die Schaltfrequenz und die Schaltverluste zusätzlich in der Phase $U_c$ um ein Drittel reduziert.

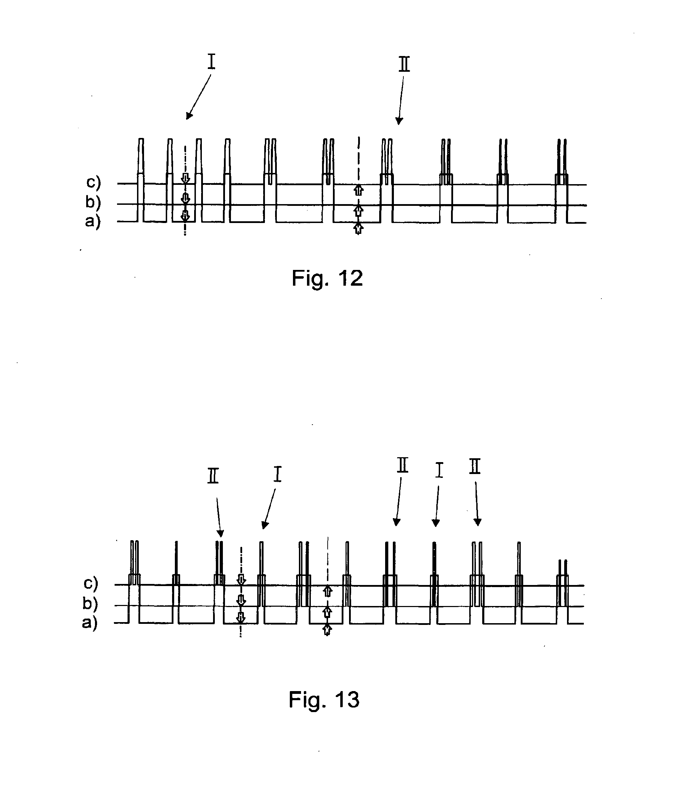

In den Figuren 12-14 sind Zeitabfolgen von PWM-Signalen zur Ansteuerung der Schaltelemente in den Halbbrücken eines dreiphasigen Umrichters entsprechend Figur 1 dargestellt. Die Schaltsignale für die einzelnen Halbbrücken bzw. Phasen sind mit a), b) und c) gekennzeichnet.

In Figur 12 wird nach einem Bereich I mit einer regulären Ansteuerung der Schaltelemente auf einen Bereich II mit einer abgewandelten Ansteuerung gewechselt. Im Bereich II sind die Schaltimpulse der Halbbrücke bzw. Phase a) von jeweils zwei benachbarten Perioden zu einem einzigen entsprechend verlängerten Schaltimpuls zusammengefasst. Die Schaltimpulse der Halbbrücke bzw. Phase c) sind entsprechend näher aneinandergerückt. Die Halbbrücke bzw. Phase b) wird nicht getaktet.

In Figur 13 wechseln sich Bereiche I regulärer PWM-Taktung mit Bereichen II abgewandelter PWM-Taktung ab. Es wird jeweils die Halbbrücke bzw. Phase a) abgewandelt angesteuert. Die Schaltimpulse der anderen Phasen b) und c) rücken entsprechend näher aneinander.

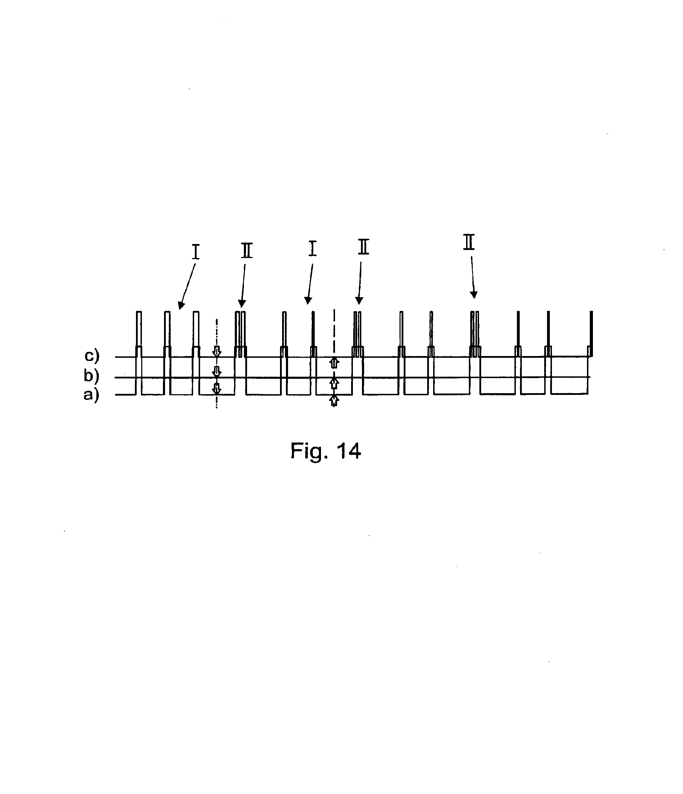

In Figur 14 wechseln sich wiederum Bereiche I regulärer PWM-Taktung mit Bereichen II abgewandelter PWM-Taktung ab. Zwischen zwei zusammengefassten Schaltimpulsen liegen jeweils zwei Perioden mit "unverschobenen" Schaltimpulsen.

## Patentansprüche

1. Verfahren zur Steuerung eines mehrphasigen Umrichters, der eine Anzahl von in einen Spannungszwischenkreis geschaltete Halbbrücken mit Mittenabgriffen zwischen Schaltelementen umfasst, wobei durch ein getaktetes Schalten der Schaltelemente die jeweiligen Mittenabgriffe der Halbbrücken nach dem Prinzip der Pulsweitenmodulation mit einer oberen Zwischenkreisschiene oder mit einer unteren Zwischenkreisschiene des Spannungszwischenkreises verbunden werden, **dadurch gekennzeichnet, dass** die Schaltelemente wenigstens einer Halbbrücke zumindest zeitabschnittsweise abgewandelt angesteuert werden, indem die Schaltimpulse von wenigstens zwei aufeinander folgenden Perioden der Pulsweitenmodulation zeitlich als ein Schaltimpuls unmittelbar aneinandergereiht werden.

2. Verfahren nach Anspruch 1, **dadurch gekennzeichnet, dass** die Schaltelemente wenigstens einer Halbbrücke abgewandelt angesteuert werden, indem die Schaltimpulse von wenigstens drei aufeinander folgenden Perioden zeitlich als ein Schaltimpuls unmittelbar aneinandergereiht werden.

3. Verfahren nach Anspruch 1 oder 2, **dadurch gekennzeichnet, dass** die Schaltelemente verschiedener Halbbrücken zu verschiedenen Zeiten abgewandelt angesteuert werden.

4. Verfahren nach einem der vorhergehenden Ansprüche, **dadurch gekennzeichnet, dass** zumindest zeitabschnittsweise die Schaltelemente mehrerer Halbbrücken gleichzeitig abgewandelt angesteuert werden.

5. Verfahren nach einem der vorhergehenden Ansprüche, **dadurch gekennzeichnet, dass** zumindest zeitabschnittsweise wenigstens die Schaltelemente jeweils derjenigen Halbbrücke abgewandelt angesteuert werden, deren Mittenabgriff aktuell mit dem größten Tastgrad geschaltet wird.

6. Verfahren nach Anspruch 4 oder 5, **dadurch gekennzeichnet, dass** die Schaltelemente der jeweils anderen Halbbrücken angesteuert werden, indem in den der abgewandelten Steuerung entsprechenden Perioden der zeitliche Abstand der Schaltimpulse entsprechend dem ursprünglichen zeitlichen Abstand der aneinandergereihten Schaltimpulse verkürzt wird.

7. Verfahren nach einem der vorhergehenden Ansprüche, **dadurch gekennzeichnet, dass** die abgewandelte Ansteuerung zeitabschnittsweise abhängig von einem einen am Umrichter angeschlossenen Wechselstromteilnehmer charakterisierenden Parameter vorgenommen wird.

8. Verfahren nach Anspruch 7, **dadurch gekennzeichnet, dass** ein einen Lastzustand und/oder einen Betriebszustand des Wechselstromteilnehmer charakterisierender Parameter herangezogen wird.

9. Verfahren nach einem der vorhergehenden Ansprüche, **dadurch gekennzeichnet, dass** ein dreiphasiger Umrichter gesteuert wird.

10. Verfahren nach Anspruch 9, **dadurch gekennzeichnet, dass** der dreiphasige Umrichter mit einem Modulationsverfahren betrieben wird, das ausgewählt ist aus der Gruppe, die eine Drei-Phasen-Taktung, eine Zwei-Phasen-Taktung und eine Ein-Phasen-Taktung enthält, wobei zumindest zeitabschnittsweise die Schaltelemente wenigstens einer der jeweils getakteten Halbbrücken abgewandelt angesteuert werden.

**11.** Verfahren nach Anspruch 10, **dadurch gekennzeichnet, dass** der dreiphasige Umrichter mit einem Modulationsverfahren der Drei-Phasen-Taktung oder der Zwei-Phasen-Taktung betrieben wird, wobei zumindest zeitabschnittsweise die Schaltelemente von zwei getakteten Halbbrücken abgewandelt angesteuert werden.

**12.** Verfahren nach einem der vorhergehenden Ansprüche, **dadurch gekennzeichnet, dass** sich zeitlich die abgewandelte Steuerung und die reguläre Steuerung abwechseln.

**13.** Verfahren nach einem der vorhergehenden Ansprüche, **dadurch gekennzeichnet, dass** die Taktfrequenz der Pulsweitenmodulation zumindest während der Zeitabschnitte der abgewandelten Steuerung angehoben wird.

**Claims**

1. Method for controlling a polyphase inverter, which comprises a number of half-bridges switched into a DC link and comprising center taps between switching elements, wherein, by clocked switching of the switching elements, the respective center taps of the half-bridges are connected to an upper DC link busbar or to a lower DC link busbar of the DC link in accordance with the principle of pulse width modulation, **characterized in that** the switching elements of at least one half-bridge are driven in modified form at least in time segments by virtue of the switching pulses of at least two successive periods of the pulse width modulation being arranged temporally directly next to one another as one switching pulse.

2. Method according to Claim 1, **characterized in that** the switching elements of at least one half-bridge are driven in modified form by virtue of the switching pulses of at least three successive periods being arranged temporally directly next to one another as one switching pulse.

3. Method according to Claim 1 or 2, **characterized in that** the switching elements of different half-bridges are driven in modified form at different times.

4. Method according to one of the preceding claims, **characterized in that**, at least in time segments, the switching elements of a plurality of half-bridges are driven in modified form simultaneously.

5. Method according to one of the preceding claims, **characterized in that**, at least in time segments, at least the switching elements of in each case that half-bridge whose center tap is presently being switched with the greatest duty factor are driven in modified form.

6. Method according to Claim 4 or 5, **characterized in that** the switching elements of the respective other half-bridges are driven by virtue of the time interval of the switching pulses being shortened corresponding to the original time interval of the switching pulses arranged next to one another in the periods corresponding to the modified control.

7. Method according to one of the preceding claims, **characterized in that** the modified driving is performed in time segments depending on a parameter characterizing an AC user connected to the inverter.

8. Method according to Claim 7, **characterized in that** a parameter characterizing a load state and/or an operating state of the AC user is used.

9. Method according to one of the preceding claims, **characterized in that** a three-phase inverter is controlled.

10. Method according to Claim 9, **characterized in that** the three-phase inverter is operated using a modulation method which is selected from the group consisting of three-phase clocking, two-phase clocking, and single-phase clocking, wherein, at least in time segments, the switching elements of at least one of the respectively clocked half-bridges are driven in modified form.

11. Method according to Claim 10, **characterized in that** the three-phase inverter is operated using a modulation method of three-phase clocking or two-phase clocking, wherein, at least in time segments, the switching elements of two clocked half-bridges are driven in modified form.

12. Method according to one of the preceding claims, **characterized in that** the modified control and the regular control alternate temporally.

13. Method according to one of the preceding claims, **characterized in that** the clock frequency of the pulse width modulation is raised at least during the time segments of the modified control.

**Revendications**

1. Procédé de commande d'un onduleur multiphasé, lequel comprend un certain nombre de demi-ponts branchés dans un circuit intermédiaire de tension avec des prises médianes entre des éléments de commutation, les prises médianes respectives des demi-ponts étant reliées selon le principe de la modulation d'impulsions en largeur par une commutation cyclique des éléments de commutation à une barre-bus de circuit intermédiaire supérieure ou à une barre-bus de circuit intermédiaire inférieure du circuit intermédiaire de tension, **caractérisé en ce que** les éléments de commutation d'au moins un demi-pont sont commandés en étant modifiés au moins par intervalles de temps **en ce que** les impulsions de commutation d'au moins deux périodes successives de la modulation d'impulsions en largeur se succèdent directement dans le temps sous la forme d'une seule impulsion de commutation.

2. Procédé selon la revendication 1, **caractérisé en ce que** les éléments de commutation d'au moins un demi-pont sont commandés en étant modifiés **en ce que** les impulsions de commutation d'au moins trois périodes successives se succèdent directement dans le temps sous la forme d'une seule impulsion de commutation.

3. Procédé selon la revendication 1 ou 2, **caractérisé en ce que** les éléments de commutation de différents demi-ponts sont commandés en étant modifiés à des instants différents.

4. Procédé selon l'une des revendications précédentes, **caractérisé en ce que** les éléments de commutation de plusieurs demi-ponts sont commandés en étant modifiés simultanément au moins par intervalles de temps.

5. Procédé selon l'une des revendications précédentes, **caractérisé en ce qu'**au moins les éléments de commutation des demi-ponts respectifs dont la prise médiane est actuellement commutée avec le rapport cyclique le plus élevé sont commandés en étant modifiés au moins par intervalles de temps.

6. Procédé selon la revendication 4 ou 5, **caractérisé en ce que** les éléments de commutation des autres demi-ponts respectifs sont commandés **en ce que**, dans les périodes correspondant à la commande modifiée, l'écart dans le temps entre les impulsions de commutation est raccourci conformément à l'écart dans le temps originel entre les impulsions de commutation qui se succèdent.

7. Procédé selon l'une des revendications précédentes, **caractérisé en ce que** la commande modifiée est effectuée par intervalles de temps en fonction d'un paramètre qui caractérise un utilisateur de courant alternatif raccordé à l'onduleur.

8. Procédé selon la revendication 7, **caractérisé en ce qu'**un paramètre caractérisant un état de charge et/ou un état opérationnel de l'utilisateur de courant alternatif est utilisé.

9. Procédé selon l'une des revendications précédentes, **caractérisé en ce qu'**un onduleur triphasé est commandé.

10. Procédé selon la revendication 9, **caractérisé en ce que** l'onduleur triphasé fonctionne avec un procédé de modulation qui est choisi dans le groupe qui contient un cadencement triphasé, un cadencement biphasé et un cadencement monophasé, les éléments de commutation d'au moins l'un des demi-ponts respectivement cadencés étant commandés en étant modifiés au moins par intervalles de temps.

11. Procédé selon la revendication 10, **caractérisé en ce que** l'onduleur triphasé fonctionne avec un procédé de modulation du cadencement triphasé ou du cadencement biphasé, les éléments de commutation de deux demi-ponts cadencés étant commandés en étant modifiés au moins par intervalles de temps.

12. Procédé selon l'une des revendications précédentes, **caractérisé en ce que** la commande modifiée et la commande normale sont alternées dans le temps.

13. Procédé selon l'une des revendications précédentes, **caractérisé en ce que** la fréquence de cadencement de la modulation d'impulsions en largeur est relevée au moins pendant les intervalles de temps de la commande modifiée.

Fig. 1

Fig. 2

Fig. 3

Fig. 4

Fig. 5

Fig. 6

Fig. 7

Fig. 8

$U_a$   $\tau_a$

$U_b$   $\tau_b$

$U_c$   $\tau_c$

a)

$T_p$

$U_a$   $\tau_a - \min(\tau_a, \tau_b, \tau_c)$

$U_b$   $\tau_b - \min(\tau_a, \tau_b, \tau_c)$

$U_c$   $\tau_c - \min(\tau_a, \tau_b, \tau_c)$

b)

$U_a$   $\tau_a + \min((T_p - \tau_a), (T_p - \tau_b), (T_p - \tau_c))$

$U_b$   $\tau_b + \min((T_p - \tau_a), (T_p - \tau_b), (T_p - \tau_c))$

$U_c$   $\tau_c + \min((T_p - \tau_a), (T_p - \tau_b), (T_p - \tau_c))$

c)

$U_a$   $\tau_a = T_p$

$U_b$   $\tau_b$

$U_c$   $\tau_c = 0$

d)

Fig. 9

18

Fig. 10

Fig. 11

Fig. 12

Fig. 13

Fig. 14

**IN DER BESCHREIBUNG AUFGEFÜHRTE DOKUMENTE**

**In der Beschreibung aufgeführte Patentdokumente**

- US 20110040519 A1
- EP 0363514 A1
- US 6819078 B2
- EP 0840441 B1
- EP 2192682 A1

**In der Beschreibung aufgeführte Nicht-Patentliteratur**

- **HANDLEY, P.G. ; BOYS, J.T.** Practical real-time PWM modulators: ah assessment. *IEE Proceedings B, Electric Power Applications,* Marz 1992, vol. 139 (2), 96 ff